# EUROPÄISCHE PATENTANMELDUNG

(11) **EP 2 829 513 A1**
(43) Veröffentlichungstag der Anmeldung: **28.01.2015**
(21) Anmeldenummer: 14075048.0
(22) Anmeldetag: 16.07.2014
(51) Int. Cl.: C01B 3/36, C10G 2/00

(54) **Verfahren zur Erzeugung von Energie durch einen Verbrennungsprozess mit vermindertem CO2-Ausstoß**

(30) Priorität: 25.07.2013 DE 102013012613
(71) Anmelder: Salzgitter Mannesmann Line Pipe Gmbh, 57074 Siegen (DE)
(72) Erfinder: Kocks, Hans-Jürgen, Dr., 57258 Freudenberg (DE); Winkels, Jörn, 59457 Werl (DE)
(74) Vertreter: Meissner, Peter E.

(57) **Zusammenfassung**

Verfahren zur Erzeugung von Energie durch einen Verbrennungsprozess mit vermindertem CO₂-Ausstoß, bei dem zum Start ein fossiler Brennstoff unterstöchiometrisch verbrannt wird, das dabei entstehende Kohlenmonoxid in einem katalytischen Syntheseverfahren mit unabhängig vom Verbrennungsprozess erzeugtem Wasserstoff in einen kohlenwasserhaltigen Brennstoff umgewandelt wird, und anschließend der Verbrennungsprozess mit optionaler Zuführung weiterer fossiler Brennstoffe durch Verbrennung des vorher erzeugten kohlenwasserstoffhaltigen Brennstoffs in einem Reaktionskreislauf weitergeführt wird.

## Beschreibung

Die Erfindung betrifft ein Verfahren zur Erzeugung von Energie durch einen Verbrennungsprozess mit vermindertem CO2-Ausstoß gemäß Patentanspruch 1.

Derartige Verbrennungsprozesse finden zum Beispiel in Kraftwerken statt, in denen Fossilbrennstoffe zur Energieerzeugung eingesetzt werden.

Die Verbrennung fossiler Brennstoffe in Form von Kohle, Erdöl, Erdgas oder hieraus hergestellten sekundären Brennstoffen führt zu einer zunehmenden Anreicherung von Co2 in der Atmosphäre. Da CO2 zu den sogenannten Treibhausgasen gehört, führen bereits geringe Konzentrationserhöhungen zu weltweiten klimatischen Veränderungen. Es wird bereits eine Erhöhung der mittleren Temperatur in der Atmosphäre beobachtet und für die nächsten Jahre ein weiterer Temperaturanstieg mit zunehmend häufiger auftretenden und heftiger werdenden Naturkatastrophen, wie Trockenperioden, Überschwemmungen oder Stürme, erwartet. Daher sind verstärkte Bemühungen notwendig, um zumindest das Tempo der weiteren Zunahme der CO2-Konzentration in der Atmosphäre zu verringern. In erster Linie versucht man dies durch Drosselung des Energieverbrauchs zu erreichen. Eine weitere Möglichkeit die Freisetzung von CO2 in die Atmosphäre zu verringern, wäre die Wiederverwendung dieses Gases oder die dauerhafte Lagerung in unterirdischen Lagerstätten.

Zur Vermeidung einer weiteren Akkumulation von CO2 in der Atmosphäre durch fossilbrennstoffbetriebene Kraftwerke ist es beispielsweise aus der DE 10 2008 048 062 B3 bekannt, in sogenannten IGCC-Kraftwerken eine CO2-Abscheidung durch eine in einer Vorstufe vollzogenen unterstöchiometrischen Vergasung des Brennstoffs vor dem eigentlichen Verbrennungsprozess vorzunehmen. In weiteren Schritten wird das bei der Vergasung entstehende Kohlenmonoxid zunächst in einer Shift-Stufe mittels eingedüstem Wasserdampf in CO2 überführt, anschließend abgetrennt und einer Endlagerung zugeführt.

Bei diesem bekannten Verfahren wird das Brenngut unterstöchiometrisch mit Reinsauerstoff aus einem vorherigem Luftzerlegungsschritt zu volatilem brennbarem Synthesegas umgewandelt, welches mit Hilfe von Wasser bzw. Wasserdampf schlussendlich zu CO2 und Wasserstoff weiterreagiert.
Nach der Abtrennung von CO2 dient der so erzeugte Wasserstoff als brennbarer Energieträger.

Zusammenfassend soll die Vermeidung des CO2-Ausstoßes und die damit erhoffte Klimaschonung bei gleichzeitiger effektiver Energiegewinnung durch vor- oder nachgeschaltete CO2-Separierungsverfahren und Endlagerung realisiert werden.

Nachteil des Verfahren ist, dass bei dieser Art der Verbrennung CO2 erzeugt wird, das aufwändig und energieintensiv abgespalten und endgelagert werden muss. Außerdem wird durch die benötigte Energie für den Shift-Prozess des Synthesegases durch die Einspeisung des Wasserdampfes der Wirkungsgrad und damit die Wirtschaftlichkeit des Kraftwerks deutlich verringert. Zudem ist mit diesem Verfahren eine Einsparung an eingesetzten fossilen Brennstoffe nicht erreichbar.

Aus der DE 10 2011 100 492 A1 ist ein Verfahren zur Minderung des CO2-Ausstoßes bei Fossilbrennstoff-Kraftwerken bekannt, bei dem die Verbrennung unterstöchiometrisch unter Bildung von im Wesentlichen Kohlenmonoxid erfolgt, wobei das Kohlenmonoxid anschließend unter Zuführung von unabhängig vom Verbrennungsprozess erzeugtem Wasserstoff zu kohlenwasserstoffhaltigen Brennstoffen weiterreagiert.

Bei diesem Verfahren wird zwar der Ausstoß von CO2 reduziert, jedoch ist nachteilig, dass die Energieeffizienz des Verfahrens noch nicht ausreichend hoch ist und weiterhin fossile Energieträger zur Verbrennung eingesetzt werden, so dass eine Ressourcenschonung nicht stattfindet.

Aufgabe der vorliegenden Erfindung ist es, ein Verfahren zur Erzeugung von Energie mittels eines Verbrennungsprozesses, insbesondere in Fossilbrennstoff-Kraftwerken anzugeben, bei dem die Entstehung von Kohlendioxid bei der Verbrennung weitgehend vermieden und gleichzeitig die Menge an eingesetzten fossilen Energieträgern zur Energieerzeugung reduziert werden kann.

Erfindungsgemäß wird die Aufgabe durch ein Verfahren gelöst, bei dem zum Start des Verbrennungsprozesses ein fossiler Brennstoff unterstöchiometrisch verbrannt wird, das dabei entstehende Kohlenmonoxid in einem katalytischen Syntheseverfahren mit unabhängig vom Verbrennungsprozess erzeugtem Wasserstoff in einen kohlenwasserstoffhaltigen Brennstoff umgewandelt wird und anschließend der Verbrennungsprozess im Wesentlichen ohne weitere Verbrennung fossiler Brennstoffe durch Verbrennung des vorher erzeugten kohlenwasserstoffhaltigen Brennstoffs in einem Reaktionskreislauf weitergeführt wird.

Als kohlenwasserstoffhaltige Brennstoffe können bei dem erfindungsgemäßen Verfahren z.B. Methan oder Methanol oder sogar höherwertige Kohlenwasserstoffe wie Benzin oder Diesel erzeugt werden, die in bekannter und einfacher Weise bei überschüssiger Produktion flüssig gespeichert bzw. gelagert oder einem externen Verbraucher zugeführt werden können.

Der Vorteil der Erfindung ist, dass es bei dem beschriebenen Verfahren durch die gezielt unterstöchiometrische Verbrennung des fossilen Brennstoffs nicht mehr zur Bildung von CO2 kommt, das aufwändig und energieintensiv abgetrennt und endgelagert werden muss. Zudem wird durch die Wiederzuführung des im Katalyseprozess erzeugten kohlenwasserstoffhaltigen Brennstoffs in den Reaktionskreislauf, die externe Zuführung fossiler Brennstoffe im Idealfall vollständig vermieden und so die Ressourcen an fossilen Brennstoffen geschont.

Eine zusätzliche optionale externe Zuführung fossiler Brennstoffe zum Verbrennungsprozess ist vorgesehen, um prozessbasierte Energieverluste auszugleichen und damit bei Bedarf die erzeugte Energiemenge zu erhöhen.

Der Clou der Erfindung besteht also darin, dass im Idealfall ein solches Kraftwerk nach anfänglichem Einsatz fossiler Brennstoffe durch die Umwandlung des Abgases in Brennstoff und dessen Wiederzuführung in den Reaktionskreislauf mit Hilfe des extern, vorzugsweise regenerativ erzeugten Wasserstoffes, völlig ohne weitere Zufuhr fossiler Brennstoffe betrieben werden kann. Der Kohlenstoff daher wird bei diesem Prozess im Kreislauf gefahren.

Die vorteilhafte Einspeisung von zuvor extern erzeugtem Wasserstoff führt dazu, dass der Wirkungsgrad des Kraftwerks steigt, da keine Energie mehr zur Erzeugung von Wasserstoff aus dem zugeführten Wasser oder Wasserdampf aus dem Verbrennungsprozess im Kraftwerk benötigt wird, zudem werden Verfahrensschritte eingespart, was die Energieerzeugung noch wirtschaftlicher und umweltfreundlicher macht.

Bei überschüssig im Reaktionskreislauf entstehendem Brennstoff, kann dieser gespeichert oder externen Verbrauchern über Rohrleitungssysteme zugeführt werden.

Der Wasserstoff wird vorteilhaft mittels regenerativer Energien, wie Wind-, Sonnenenergie oder Erdwärme erzeugt, um auch hierbei die Entstehung von Kohlendioxid weitgehend zu vermeiden.

Im Grundsatz ist das beschriebene katalytische Verfahren zur Herstellung der Brennstoffe z. B. als Fischer Tropsch Verfahren zur synthetischen Herstellung von Kraftstoffen bekannt. Der Rohstoff für die so genannte Fischer-Tropsch-Synthese (FTS) ist Synthesegas, eine Mischung aus Kohlenmonoxid und Wasserstoff. Das Synthesegas kann aus Kohle oder Erdgas und im Prinzip auch aus Erdölfraktionen wie Schweröl erzeugt werden und ist - gegebenenfalls nach Reinigung - völlig schwefelfrei; demzufolge sind auch die in der nachfolgenden FTS erzeugten Kraftstoffe völlig frei von Verunreinigungen.

Ein weiterer Vorteil des erfindungsgemäßen Verfahrens besteht auch darin, dass durch einfaches Umrüsten im Hinblick auf die Einspeisung des extern erzeugten Wasserstoffs die bestehende Infrastruktur der Energie erzeugenden Anlagen weiter genutzt werden kann und die bestehenden Regelmechanismen in der Stromversorgung bestehen bleiben.

Einsetzbar ist dieses innovative Verfahren nicht nur in Kraftwerken, sondern auch in anderen Industriebereichen wie die Stahl- oder Zementindustrie, da auch hier fossile Brennstoffe als Energieträger durch eine entsprechende Aufbereitung der Abgase substituiert werden können. Zudem ist auch der Einsatz z.B. in Privathaushalten für Heizungsanlagen denkbar.

## Patentansprüche

1. Verfahren zur Erzeugung von Energie durch einen Verbrennungsprozess mit vermindertem CO2-Ausstoß, bei dem zum Start ein fossiler Brennstoff unterstöchiometrisch verbrannt wird, das dabei entstehende Kohlenmonoxid in einem katalytischen Syntheseverfahren mit unabhängig vom Verbrennungsprozess erzeugtem Wasserstoff in einen kohlenwasserstoffhaltigen Brennstoff umgewandelt wird und anschließend der Verbrennungsprozess mit optionaler Zuführung weiterer fossiler Brennstoffe durch Verbrennung des vorher erzeugten kohlenwasserstoffhaltigen Brennstoffs in einem Reaktionskreislauf weitergeführt wird.

2. Verfahren nach Anspruch 1,
**dadurch gekennzeichnet,**
**dass** zum Start des Reaktionskreislaufs als fossiler Brennstoff Kohle, Erdgas oder Schweröl eingesetzt wird.

3. Verfahren nach Anspruch 1 und 2,
**dadurch gekennzeichnet,**
**dass** die externe Wasserstofferzeugung mittels regenerativer Energie erfolgt.

4. Verfahren nach Anspruch 3,
**dadurch gekennzeichnet,**
**dass** die regenerative Energie Wind-, Sonnenenergie oder Erdwärme ist.

5. Verfahren nach einem der Ansprüche 1 bis 4,
**dadurch gekennzeichnet,**
**dass** die entstehenden kohlenwasserstoffhaltigen Brennstoffe gasförmig oder flüssig sind.

6. Verfahren nach Anspruch 5,
**dadurch gekennzeichnet,**
**dass** die Brennstoffe Methan, Methanol, Benzin oder Dieselkraftstoff sind.

7. Verfahren nach einem der Ansprüche 1 bis 6,
**dadurch gekennzeichnet,**
**dass** bei überschüssig im Reaktionskreislauf entstehendem Brennstoff, dieser gespeichert oder externen Verbrauchern über Rohrleitungssysteme zugeführt wird.
